# EUROPEAN PATENT APPLICATION

(11) **EP 3 056 988 A1**
(43) Date of publication of application: **17.08.2016**
(21) Application number: 13895319.5
(22) Date of filing: 11.10.2013
(51) Int. Cl.: G06F 9/445

(54) **METHOD, APPARATUS AND SYSTEM FOR HOME MANAGEMENT DEVICE VIRTUALIZATION**

(71) Applicant: Huawei Technologies Co., Ltd., Longgang District Shenzhen, Guangdong 518129 (CN)
(72) Inventor: PENG, Chenghui, Shenzhen Guangdong 518129 (CN); ZHANG, Wei, Shenzhen Guangdong 518129 (CN); ZHANG, Wei, Shenzhen Guangdong 518129 (CN)
(74) Representative: Isarpatent
(86) International application number: PCT/CN2013/085037
(87) International publication number: WO 2015/051528

(57) **Abstract**

Embodiments of the present invention provide a method, apparatus and system for virtualization of a home management device. The device is a home location register HLR or a home user server HSS. The virtualized home management device of the present invention includes at least two virtual machines, where each virtual machine correspondingly implements one function of the device, and the VMs are connected through an interface. The embodiments of the present invention solves the problem of low cost-performance ratio and inflexibility resulting from the fact that a newly allocated VM is required to perform functions of the entire home management device when a certain function is confronted with a performance bottleneck and needs to be expanded.

## Description

### TECHNICAL FIELD

Embodiments of the present invention relates to communication technologies, particularly to a method, apparatus and system for virtualization of a home management device.

### BACKGROUND

Network functions virtualization (Network Functions Virtualization, hereinafter referred to as NFV) aims at enabling various types of network device to be integrated into servers, switches and storage devices that conform to industrial standards by research and development of standard information technology (Information Technology, hereinafter referred to as IT) virtualization technology, including implementing network functions in a virtualized way by running software on a range of industrial standard servers. With continuous developments of virtual machine (Virtual Machine, hereinafter referred to as the VM) technology, it is possible for all functions of existing network devices to be implemented through VMs.

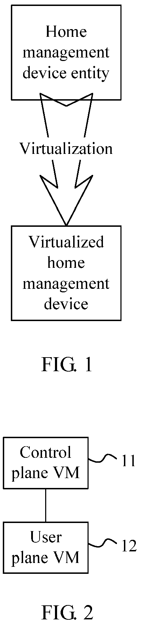

FIG.1 is a schematic process diagram for virtualization of a home management device entity in the prior art, where the home management device is a home location register (Home Location Register, hereinafter referred to as HLR) or a home subscriber server (Home Subscriber Server, hereinafter referred to as HSS). As shown in FIG.1, in the prior art, functions of the home management device, i.e. the HLR or the HSS entity are virtualized as a whole to form a home management device VM. In addition, in the case that there are multiple home management device VMs in a network, a virtualized switch can be employed to administer routing among the multiple home management device VMs.

However, the home management device entity may include multiple functional modules configured for controlling, querying and updating etc, the functional modules have various implementation complexities, and therefore, the occurrence of a performance bottleneck on a certain functional module will degrade the performance of the entire home management device VM. In addition, when the performance of the home management device VM is expanded, a newly allocated VM is required to perform the functions of the entire home management device, leading to low cost-performance ratio and inflexibility.

### SUMMARY

Embodiments of the present invention provide a method, apparatus and system for virtualization of a home management device, so as to solve the problem of low cost-performance ratio and inflexibility resulting from the fact that a newly allocated VM is required to perform the functions of the entire home management device when a certain function is confronted with a performance bottleneck and needs to be expanded.

In a first aspect, an embodiment of the present invention provides a virtualized home management device, the device is a home location register HLR or a home subscriber server HSS and comprises:
at least two virtual machines;
where each of the virtual machines correspondingly implements one function of the device; and
where the virtual machines are connected through an interface.

According to the first aspect, in a first possible implementation of the first aspect, the device specifically includes a control plane virtual machine and a user plane virtual machine;
where the control plane virtual machine is configured to implement a control plane function of the device while the user plane virtual machine is configured to implement a user plane function of the device.

According to the first aspect, in a second possible implementation of the first aspect, the device specifically includes a control plane virtual machine and a user plane virtual machine;
where the control plane virtual machine is configured to implement a control plane function of the device; and
the user plane virtual machine includes: an I/O virtual machine configured to implement an input/output I/O function, an interface protocol virtual machine configured to implement an interface protocol processing function, a querying virtual machine configured to implement a querying function, a writing virtual machine configured to implement a writing function, an updating virtual machine configured to implement an updating function and a data storing virtual machine configured to implement a data storing function.

According to the second possible implementation of the first aspect, in a third possible implementation of the first aspect, the I/O virtual machine specifically includes one or more I/O virtual machines; the interface protocol virtual machine specifically includes one or more interface protocol virtual machines; the querying virtual machine specifically includes one or more querying virtual machines; the writing virtual machine specifically includes one or more writing virtual machines; the updating virtual machine specifically includes one or more updating virtual machines; and the data storing virtual machine specifically includes one or more data storing virtual machines.

In a second aspect, an embodiment of the present invention provides a virtualized home management system, comprising:
a coordination device and at least two virtualized home management devices according to any of claims 2 to 4, where the home management devices are a home location register HLR or a home subscriber server HSS, and the at least two virtualized home management devices are connected with the coordination device;
where the coordination device is configured to perform routing among the at least two virtualized home management devices, and to add or reduce a user plane virtual machine of the home management devices in accordance with resource request information sent by the home management devices.

According to the second aspect, in a first possible implementation of the second aspect, the coordination device is specifically configured to perform at least one of the following operations:
adding or reducing at least one input/output I/O virtual machine of the home management devices in accordance with the resource request information;
adding or reducing at least one interface protocol virtual machine of the home management devices in accordance with the resource request information;
adding or reducing at least one querying virtual machine of the home management devices in accordance with the resource request information;
adding or reducing at least one writing virtual machine of the home management devices in accordance with the resource request information;
adding or reducing at least one updating virtual machine of the home management devices in accordance with the resource request information; and
adding or reducing at least one data storing virtual machine of the home management devices in accordance with the resource request information.

In a third aspect, an embodiment of the present invention provides a method for virtualization of a home management device, including:
partitioning functions of the home management device to obtain at least two functions, where the home management device is a home location register HLR or a home subscriber server HSS; and
performing virtualization processing on the at least two functions, respectively, to obtain virtual machines respectively corresponding to the at least two functions, wherein the virtual machines are connected via an interface.

According to the third aspect, in a first possible implementation of the third aspect, the partitioning the functions of the home management device to obtain at least two functions, includes:
partitioning the functions of the home management device to obtain a control plane function and a user plane function of the home management device; and
performing virtualization processing on the at least two functions, respectively, to obtain the virtual machines respectively corresponding to the at least two functions, includes:
   performing virtualization processing on the control plane function and the user plane function, respectively, to obtain a control plane virtual machine corresponding to the control plane function and a user plane virtual machine corresponding to the user plane function.

According to the third aspect, in a second possible implementation of the third aspect, the partitioning the functions of the home management device to obtain at least two functions, includes:
partitioning the functions of the home management device to obtain a control plane function and a user plane function of the home management device, where the user plane function includes an input/output I/O function, an interface protocol processing function, a querying function, a writing function, an updating function and a data storing function; and
the performing virtualization processing on the at least two functions, respectively, to obtain virtual machines respectively corresponding to the at least two functions includes:
   performing virtualization processing on the control plane function and the user plane function, respectively, to obtain a control plane virtual machine corresponding to the control plane function and a user plane virtual machine corresponding to the user plane function, where the user plane virtual machine includes an I/O virtual machine corresponding to the I/O function, an interface protocol virtual machine corresponding to the interface protocol processing function, a querying virtual machine corresponding to the querying function, a writing virtual machine corresponding to the writing function, an updating virtual machine corresponding to the updating function and a data storing virtual machine corresponding to the data storing function.

According to the first or second possible implementation of the third aspect, in a third possible implementations of the third aspect, the control plane function includes an access control sub-function, a location management sub-function, a security management sub-function, a path management sub-function and an extension sub-function.

In a fourth aspect, an embodiment of the present invention provides an apparatus for virtualization of home management, including:
a partitioning module, configured to partition functions of a home management device to obtain at least two functions, where the home management device is a home location register HLR or a home subscriber server HSS; and
a virtualizing module, configured to perform virtualization processing on the at least two functions, respectively, to obtain virtual machines respectively corresponding to the at least two functions, where the virtual machines are connected through an interface.

According to the fourth aspect, in a first possible implementation of the fourth aspect, the partitioning module is specifically configured to partition the functions of the home management device to obtain a control plane function and a user plane function of the home management device; and
the virtualizing module is specifically configured to perform virtualization processing on the control plane function and the user plane function, respectively, to obtain a control plane virtual machine corresponding to the control plane function and a user plane virtual machine corresponding to the user plane function.

According to the fourth aspect, in a second possible implementation of the fourth aspect, the partitioning module is specifically configured to partition the functions of the home management device to obtain a control plane function and a user plane function of the home management device, where the user plane function includes an input/output I/O function, an interface protocol processing function, a querying function, a writing function, an updating function and a data storing function; and
the virtualizing module is specifically configured to perform virtualization processing on the control plane function and the user plane function, respectively, to obtain a control plane virtual machine corresponding to the control plane function and a user plane virtual machine corresponding to the user plane function, where the user plane virtual machine includes an I/O virtual machine corresponding to the I/O function, an interface protocol virtual machine corresponding to the interface protocol processing function, a querying virtual machine corresponding to the querying function, a writing virtual machine corresponding to the writing function, an updating virtual machine corresponding to the updating function and a data storing virtual machine corresponding to the data storing function.

According to the first or second possible implementations of the fourth aspect, in a third possible implementations of the fourth aspect, the control plane function includes an access control sub-function, a location management sub-function, a security management sub-function, a path management sub-function and an extension sub-function.

According to the embodiments of the present invention, through partitioning the functions of the home management device and performing virtualization processing thereon respectively, the method, apparatus and system for virtualization of a home management device achieve that each VM corresponds to one function of the home management device. When a certain function is confronted with a performance bottleneck and requires to be expanded, only the function that suffers a performance bottleneck needs to be implemented in a newly allocated VM, thereby reducing the complexity of software for home management device virtualization, and providing high implementation flexibility, easy management, as well as an improved cost-performance ratio.

### BRIEF DESCRIPTION OF THE DRAWINGS

In order to illustrate the embodiments of the present invention or technical solutions in the prior art more clearly, accompanying drawings used for description of the embodiments of the present invention or the prior art will be briefly described hereunder. Obviously, the described drawings are merely some embodiments of present invention. For persons skilled in the art, other drawings may be obtained based on these drawings without any creative effort.
FIG.1 is a schematic process diagram for virtualization of a home management device entity in the prior art;
FIG.2 is a schematic structure diagram for a first embodiment of a virtualized home management device according to the present invention;
FIG.3 is a schematic structure diagram for a second embodiment of the virtualized home management device according to the present invention;
FIG.4 is a schematic structure diagram for an embodiment of a virtualized home management system according to the present invention;
FIG.5 is a flowchart for a first embodiment of a method for virtualization of a home management device according to the present invention;
FIG.6 is a flowchart for a second embodiment of the method for virtualization of a home management device according to the present invention; and
FIG.7 is a schematic structure diagram for an embodiment of an apparatus for virtualization of home management according to the present invention.

### DESCRIPTION OF EMBODIMENTS

In order to make the purpose, technical solutions and advantages of embodiments of the present invention more clearly, technical solutions in the embodiments of the present invention will be described clearly and completely hereinafter with reference to accompanying drawings in the embodiments of the present invention. Obviously, the described embodiments are only a part of embodiments of the present invention, rather than all embodiments of the present invention. All other embodiments obtained by persons of ordinary skill in the art based on embodiments of the present invention without any creative effort shall fall within the protection scope of the present invention.

In the embodiments of the present invention, the home management device may be a home location register or a home subscriber server. These two types of network devices have similar functions, except that HLR is a central database of a 2G network while HSS is a core user database of a 3G network, and HSS supports multimedia users on the basis of HLR. A virtualized home management device is implemented which includes at least two VMs with each VM implementing one corresponding function of the home management device, that is, the functions of the home management device entity are partitioned, for example, according to functions such as controlling, interface protocol processing, querying, and each function is implemented by one or more VMs in a virtualized way, and the VMs are connected through an interface or interfaces to achieve communications between the VMs. It should be noted that not every two VMs are connected through an interface, the case in the embodiments mainly refers to that the VMs that need to communication with each other are connected via an interface, where the interface may be a common interface between the VMs and may also be a new communication interface developed specifically for the virtualized home management device, which will not be limited herein.

FIG.2 is a schematic structure diagram for a first embodiment of a virtualized home management device according to the present invention. As shown in FIG.2, the home management device of the embodiment may include: a control plane VM 11 and a user plane VM 12, where the control plane VM 11 is configured to implement a control plane function of the home management device, and the user plane VM 12 is configured to implement a user plane function of the home management device.

In this embodiment, through partitioning the functions of the home management device and performing virtualization processing thereon respectively, it is achieved that each VM corresponds to one function of the home management device, which reflects characteristics of software defined network (Software Defined Network, hereafter referred to as SDN). Through such implementation method, when a certain function is confronted with a performance bottleneck and needs to be expanded, only the function that suffers a performance bottleneck needs to be implemented in a newly allocated VM, which reduces the complexity of the software for home management device virtualization, and provides high implementation flexibility, easy management, as well as an improved cost-performance ratio.

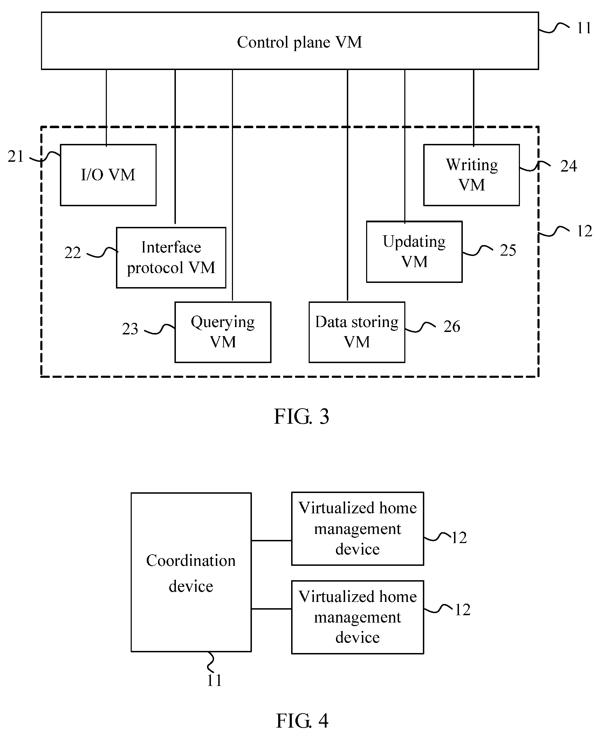

FIG.3 is a schematic structure diagram for a second embodiment of the virtualized home management device of the present invention. As shown in FIG.3, on the basis of the home management device as shown in FIG.2, in the home management device of this embodiment, the user plane VM 12 may further include: an input/output (Input/Output, hereafter referred to as I/O) VM 21, an interface protocol VM 22, a querying VM 23, a writing VM 24, an updating VM 25 and a data storing VM 26. The I/O VM 21 is configured to implement an I/O function. The interface protocol VM 22 is configured to implement an interface protocol processing function, where for the HLR, the interface protocol mainly refers to mobile application part (Mobile Application Part, hereafter referred to as MAP) protocol, while for the HSS, the interface protocol mainly refers to diameter (Diameter) protocol. The querying VM 23 is configured to implement a user information querying function. The writing VM 24 is configured to implement a user information writing function. The updating VM 25 is configured to implement a user information updating function. The data storing VM 26 is configured to implement a data storing function.

Furthermore, the I/O VM 21, the interface protocol VM 22, the querying VM 23, the writing VM 24, the updating VM 25 and the data storing VM 26 may be one or more, namely, each user plane function may be implemented by one VM, and may also be implemented by multiple VMs, depending on the load of the VM(s) for the functions, and this is not limited in the embodiment.

In the embodiment, the user plane function is further partitioned, which includes an I/O function, an interface protocol processing function, a querying function, a writing function, an updating function and a data storing function, where each function is implemented by one or more corresponding VMs, respectively, so that the user plane function has finer partitioning granularities, and in the case that performance bottlenecks, such as excessive load or slow running, occur on the VM(s) configured to implement a certain function, for example, the amount of data that the querying VM needs to query is so large or the querying operation is so frequent that the maximum load of all the querying VM(s) is exceeded, a new querying VM will then be allocated to share the load of other querying VM(s), allowing low complexity for software implementation and easy management.

Four detailed implementation processes of the home management device will be described hereafter through examples, so as to illustrate in detail the functions of and the interactions between VMs of the virtualized home management device.

Authentication and authorization process of the home management device: the home management device has a function of performing authentication and authorization for users, and storing information of all uses belonging to it, such as user number, user identification, authentication information, service information, etc.

Step 1: a control plane VM of a home management device receives, via an I/O VM and an interface protocol VM, user authentication request information sent by a gateway device.

Step 2: the control plane VM determines a VM participating in the authentication and authorization process according to the user authentication request information. Specifically, the control plane function of the home management device includes a path management sub-function, the role of which is to manage a processing path among various VMs after a data flow enters the home management device. In the embodiment, for example, the authentication and authorization process requires participation of the control plane VM, the querying VM and the writing VM, and therefore a path management module of the control plane VM can determine that data for the authentication and authorization process needs to pass through VMs in a sequence of the control plane VM, the querying VM and the writing VM, where the control plane VM is mainly in charge of access control of users, the querying VM is mainly in charge of querying subscription information of users, and the writing VM is mainly in charge of updating current location information of users.

Step 3: the home management device outputs authorization confirmation information, and sends the information to the receiving gateway device through the interface protocol VM and the I/O VM.

Update process of the home management device: when the location of a user in a network changes due to movement, the home management device needs to update information of the user according to the changed location.

Step 1: a control plane VM of the home management device receives, via an I/O VM and an interface protocol VM, user location update request information sent by a gateway device;

step 2: the control plane VM determines a VM participating in the updating process according to the location update request information. Specifically, a path management module of the control plane VM determines that the process of processing the location update request requires participation of the control plane VM and the updating VM, and, as a result, data for the update process passes through VMs in a sequence of the control plane VM and the updating VM, where the control plane VM also includes a location management sub-function which is mainly in charge of querying locations of a user and a service thereof, while the updating VM is mainly in charge of updating current location information of the user.

Step 3: the home management device outputs update confirmation information, and sends the information to the receiving gateway device through the interface protocol VM and the I/O VM.

Process of load balance over VMs of a same type in the home management device: for VMs of a same type in the home management device, some of them may be overloaded while some of them may have a small load, which results in load imbalance over the VMs of the same type. The I/O VM is taken as an example to illustrate the process of load balance over the VMs of the same type.

Step 1: a control plane VM of the home management device collects resource usage of each I/O VM periodically, for example, usage information of a central processing unit (Central Processing Unit, hereinafter referred to as the CPU) of the I/O VM.

Step 2: the control plane VM detects that a certain I/O VM is overloaded, namely, the resource usage exceeds a preset threshold value, for instance, CPU percentage usage of the I/O VM exceeds a reasonable threshold value while some other I/O VMs use few resources, the control plane VM then adopts a load balance strategy to switch services of a part of activated users to other idle I/O VM for processing, so as to achieve load balance over the I/O VMs.

Fault handling process of the home management device: in the present invention, functions of the home management device are partitioned and respectively virtualized, thus failure of a certain VM needs to be detected in time and then processed. I/O VM is taken as an example to illustrate the fault handling process.

Step 1: a control plane VM of the home management device collects the operation status information of each I/O VM periodically, where a fault may be disconnection of a link between a certain I/O VM and the control plane VM, causing the control plane VM to lose control of the I/O VM.

Step 2: the control plane VM switches a signaling request processed by the failed I/O VM to other I/O VM for processing; or alternatively, the control plane VM sends resource request information to a coordination device according to the current load of the I/O VM, and the coordination device allocates a new I/O VM for the home management device, and then the control plane VM switches the signaling request processed by the failed I/O VM to the new I/O VM for processing.

FIG.4 is a schematic structure diagram for an embodiment of a virtualized home management system according to the present invention. As shown in FIG.4, the system of the embodiment includes a coordination device 11 and at least two virtualized home management devices 12, where the virtualized home management devices 12 are connected with the coordination device 11. The coordination device11 is configured to perform routing among the at least two virtualized home management devices 12, and to add or reduce a user plane VM of the home management devices 12 according to resource request information sent by the virtualized home management devices 12. The home management devices 12 adopt the structure of the device embodiment as shown in FIG.2 or FIG.3, which can be an HLR or an HSS.

In the embodiment, the coordination device 11 adjusts the user plane VMs of the virtualized home management devices 12 based on the resource request information sent by the virtualization home management devices 12, namely, adding or reducing a user plane VM of the virtualized home management devices, so that load balance can be achieved over the user plane VMs of the virtualized home management devices 12, and the operation of the whole home management device will not be affected by the performance degradation of a certain VM.

Furthermore, the coordination device 11 adds or reduces a user plane VM of the virtualized home management devices 12 based on the resource request information sent by the virtualized home management devices 12, the specific implementation of which may be: the coordination device 11 adds or reduces at least one I/O VM of the virtualized home management devices based on the resource request information,; or alternatively, the coordination device 11 adds or reduces at least one protocol processing VM of the virtualized home management devices based on the resource request information; or alternatively, the coordination device 11 adds or reduces at least one querying VM of the virtualized home management devices based on the resource request information; or alternatively, the coordination device 11 adds or reduces at least one writing VM of the virtualized home management devices based on the resource request information; or alternatively, the coordination device 11 adds or reduces at least one updating VM of the virtualized home management devices based on the resource request information; or alternatively, the coordination device 11 adds or reduces at least one data storing VM of the virtualization home management devices based on the resource request information. For example, the coordination device 11 may be informed that a virtualization home management device 12 requests to add an I/O VM, then the coordination device 11 may allocate a proper number of I/O VM resource to the virtualization home management device 12 in accordance with known resources condition, and sends an allocation result to the virtualized home management device 12, so that the virtualized home management device 12 can establish a controlling relationship with the newly allocated I/O VM, and distribute authorization request information received subsequently to the newly allocated VM I/O, thereby alleviating load pressure on the I/O VM(s) of the virtualized home management device 12 effectively.

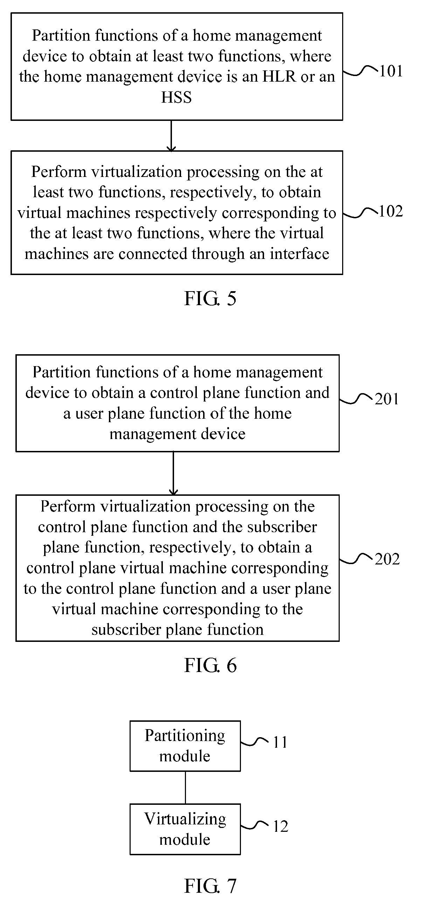

FIG.5 is a flowchart for a first embodiment of the method for virtualization of a home management device according to the present invention. As shown in FIG.5, the method of the embodiment may include:

Step 101: partition functions of a home management device to obtain at least two functions, where the home management device is an HLR or an HSS.

In the embodiment, the home management device is an HLR or an HSS. These two types of network devices have similar functions, except that the HLR is a central database of a 2G network while the HSS is a core user database of a 3G network, and the HSS supports multimedia users on the basis of HLR. The functions of the home management device are partitioned to obtain at least two functions, and the home management device provides authentication and authorization for users, and processes changes in services caused by changes in user locations. Therefore, under the premise of realizing the above functions, there must be a more granular function partition which can obtain refined functions.

Step 102: perform virtualization processing on the at least two functions to obtain virtual machines respectively corresponding to the at least two functions, where the virtual machines are connected via an interface.

In the embodiment, performing virtualization processing on the at least two obtained functions respectively, that is, each function corresponds to one VM and the VM only needs to implement one single corresponding function, where the VMs are connected by interface or other means to achieve intercommunication.

Through partitioning and virtualizing the functions of the home management device, the embodiment achieves that each VM corresponds to one function of the home management device, and thus solves the problem of low cost-performance ratio and inflexibility resulting from the fact that a newly allocated VM is required to perform the functions of the entire home management device when a certain function is confronted with a performance bottleneck and needs to be expanded.

FIG.6 is a flowchart for a second embodiment of the method for virtualization of a home management device according to the present invention. As shown in FIG.6, the method of the embodiment may include:

Step 201: partition functions of a home management device to obtain a control plane function and a user plane function of the home management device.

In the embodiment, functions of the home management device are partitioned to obtain a control plane function and a user plane function. The control plane function further includes: an access control sub-function, a location management sub-function, a security management sub-function, a path management sub-function and an extension sub-function, where the access control sub-function is mainly configured to perform authentication and authorization of user identity, the location management sub-function is mainly configured to manage locations of users or services, the security management sub-function is mainly configured to guarantee security of user information, the path management sub-function is mainly configured to manage a processing path among the VMs after a data flow enters the home management device, and the expansion sub-function is mainly configured to provide an extension interface for the control plane function and can further refine and supplement the functions of the control plane.

Step 202: perform virtualization processing on the control plane function and the user plane function, respectively, to obtain a control plane virtual machine corresponding to the control plane function and a user plane virtual machine corresponding to the user plane function.

In the embodiment, the partitioned control plane function and user plane function are virtualized, respectively, where the control plane function corresponds to the control plane VM and the user plane function corresponds to the user plane VM.

The user plane function is further partitioned, including an I/O function, an interface protocol processing function, a querying function, a writing function, an updating function and a data storing function, and correspondingly, the user plane virtual machine includes an I/O virtual machine corresponding to the I/O function, an interface protocol virtual machine corresponding to the interface protocol processing function, a querying virtual machine corresponding to the querying function, a writing virtual machine corresponding to the writing function, an updating virtual machine corresponding to the updating function and a data storing virtual machine corresponding to the data storing function. Implementation of overall functions of the home management device by processing and interaction of the data among different virtual machines has been illustrated in the above four detailed implementations of the home management device, thus the details will be not be repeated here.

In the embodiment, through partitioning the functions of the home management device into finer granularities and performing virtualization processing on them respectively, it is achieved that each VM corresponds to one function of the home management device, thereby solving the problem of low cost-performance ratio, high software inflexibility and difficult management resulting from the fact that a newly allocated VM is required to perform the functions of the entire home management device when a certain function is confronted with a performance bottleneck and needs to be expanded.

FIG. 7 is a schematic structure diagram for an embodiment of an apparatus for virtualization of home management according to the present invention. As shown in FIG. 7, the apparatus of the embodiment may include a partitioning module 11 and a virtualizing module 12. The partitioning module 11 is configured to partition functions of a home management device to obtain at least two functions, and the home management device is a home location register HLR or a home subscriber server HSS. The virtualizing module 12 is configured to perform virtualization processing on the at least two functions to obtain virtual machines respectively correspond to the at least two functions, where the VMs are connected via an interface.

The apparatus of the embodiment can be used to carry out the technical solution of the method embodiment illustrated by FIG. 5 or FIG. 6, they have similar implementation principles and technical effects and thus no more detail will be repeated here.

It should be understood that the apparatus and method disclosed in the embodiments of the present invention may be implemented in other ways. For example, the apparatus embodiments described above are merely illustrative, for example, the partitioning of units is just logical function partitioning, and other partitioning methods may be adopted in practice, for example, multiple units or components may be combined or integrated into another system, or otherwise, some features may be omitted or not implemented. In addition, the coupling, direct coupling or communication connection between one and another illustrated or discussed herein may be indirect coupling or communication connection through interfaces, apparatuses or units, which can be implemented electrically, mechanically or in other forms.

The units described as separate parts may be or not be physically separated, and the parts illustrated as units may be or not be physical units which may be located in single place or distributed to a plurality of network elements. And the purposes of the embodiments can be fulfilled by selecting some or all of the units according to actual demand.

Additionally, various function units in the embodiments of the present invention may be integrated in a processing unit, or each unit may exist as a separate physical entity, or two or more function units may be integrated into one unit. The integrated units may be implemented in the form of hardware, or in the form of hardware and software function units.

The integrated unit implemented in the form of software function units can be stored in a computer readable storage medium. The software function units are stored in a storage medium, including several instructions for enabling a computer device (which may be a personal computer, a server, or a network device) or a processor (processor) to execute part of the steps of the methods described in the embodiments of the present invention. And the aforementioned storage medium includes various medium that can store program codes, such as USB flash disk, mobile hard disk, read only memory (Read Only Memory, ROM), random access memory (Random Access Memory, RAM), magnetic disk or optical disc.

It can be clearly understood by those skilled in the art that, illustrations are made by the aforementioned partitioning of function modules for convenient and concise description, and in practical application, the aforementioned functions can be allocated to different function modules for implementation according to needs, i.e. the inner structure of apparatus is partitioned into different function modules to implement all or part of the functions described above. For the specific operation process of the apparatus described above, refer to corresponding process in the above method embodiments, which will not be repeated here.

Finally, it should be noted that the embodiments above are merely intended to illustrate the technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features thereof; however, these modifications or replacements do not make the essence of corresponding technical solutions depart from the scope of the technical solutions in the embodiments of the present invention.

## Claims

1. A virtualized home management device, wherein the device is a home location register HLR or a home subscriber server HSS and comprises:
at least two virtual machines;
wherein each of the virtual machines correspondingly implements one function of the device; and
the virtual machines are connected through an interface.

2. The device according to claim 1, wherein the device specifically comprises a control plane virtual machine and a user plane virtual machine;
wherein the control plane virtual machine is configured to implement a control plane function of the device and the user plane virtual machine is configured to implement a user plane function of the device.

3. The device according to claim 1, wherein the device specifically comprises a control plane virtual machine and a user plane virtual machine;
wherein the control plane virtual machine is configured to implement a control plane function of the device; and
the user plane virtual machine comprises an I/O virtual machine configured to implement an input/output I/O function, an interface protocol virtual machine configured to implement an interface protocol processing function, a querying virtual machine configured to implement a querying function, a writing virtual machine configured to implement a writing function, an updating virtual machine configured to implement an updating function and a data storing virtual machine configured to implement a data storing function.

4. The device according to claim 3, wherein the I/O virtual machine specifically comprises one or more I/O virtual machines, the interface protocol virtual machine specifically comprises one or more interface protocol virtual machines, the querying virtual machine specifically comprises one or more querying virtual machines, the writing virtual machine specifically comprises one or more writing virtual machines, the updating virtual machine specifically comprises one or more updating virtual machines, and the data storing virtual machine specifically comprises one or more data storing virtual machines.

5. A virtualized home management system, comprising:
a coordination device and at least two virtualized home management devices according to any of claims 2 to 4, wherein the home management devices are a home location register HLR or a home subscriber server HSS, and the at least two virtualized home management devices are connected with the coordination device;
wherein the coordination device is configured to perform routing among the at least two virtualized home management devices, and to add or reduce a user plane virtual machine of the home management devices in accordance with resource request information sent by the home management devices.

6. The system according to claim 5, wherein the coordination device is specifically configured to perform at least one of following operations:
adding or reducing at least one input/output I/O virtual machine of the home management devices in accordance with the resource request information;
adding or reducing at least one interface protocol virtual machine of the home management devices in accordance with the resource request information;
adding or reducing at least one querying virtual machine of the home management devices in accordance with the resource request information;
adding or reducing at least one writing virtual machine of the home management devices in accordance with the resource request information;
adding or reducing at least one updating virtual machine of the home management devices in accordance with the resource request information; and
adding or reducing at least one data storing virtual machine of the home management devices in accordance with the resource request information.

7. A method for virtualization of a home management device, comprising:
partitioning functions of the home management device to obtain at least two functions, wherein the home management device is a home location register HLR or a home subscriber server HSS;
performing virtualization processing on the at least two functions, respectively, to obtain virtual machines respectively corresponding to the at least two functions, wherein the virtual machines are connected through an interface.

8. The method according to claim 7, wherein the partitioning the functions of the home management device to obtain at least two functions, comprises:
partitioning the functions of the home management device to obtain a control plane function and a user plane function of the home management device; and
wherein the performing virtualization processing on the at least two functions, respectively, to obtain the virtual machines respectively corresponding to the at least two functions, comprises:
performing virtualization processing on the control plane function and the user plane function, respectively, to obtain a control plane virtual machine corresponding to the control plane function and a user plane virtual machine corresponding to the user plane function.

9. The method according to claim 7, wherein the partitioning the functions of the home management device to obtain at least two functions, comprises:
partitioning the functions of the home management device to obtain a control plane function and a user plane function of the home management device, wherein the user plane function comprises an input/output I/O function, an interface protocol processing function, a querying function, a writing function, an updating function and a data storing function; and
wherein the performing virtualization processing on the at least two functions, respectively, to obtain the virtual machines respectively corresponding to the at least two functions, comprises:
performing virtualization processing on the control plane function and the user plane function, respectively, to obtain a control plane virtual machine corresponding to the control plane function and a user plane virtual machine corresponding to the user plane function, wherein the user plane virtual machine comprises an I/O virtual machine corresponding to the I/O function, an interface protocol virtual machine corresponding to the interface protocol processing function, a querying virtual machine corresponding to the querying function, a writing virtual machine corresponding to the writing function, an updating virtual machine corresponding to the updating function and a data storing virtual machine corresponding to the data storing function.

10. The method according to claim 8 or 9, wherein the control plane function comprises an access control sub-function, a location management sub-function, a security management sub-function, a path management sub-function and an extension sub-function.

11. An apparatus for virtualization of home management, comprising:
a partitioning module, configured to partition functions of a home management device to obtain at least two functions, wherein the home management device is a home location register HLR or a home subscriber server HSS; and
a virtualizing module, configured to perform virtualization processing on the at least two functions, respectively, to obtain virtual machines respectively corresponding to the at least two functions, wherein the virtual machines are connected through an interface.

12. The apparatus according to claim 11, wherein the partitioning module is specifically configured to partition the functions of the home management device to obtain a control plane function and a user plane function of the home management device; and
the virtualizing module is specifically configured to perform virtualization processing on the control plane function and the user plane function, respectively, to obtain a control plane virtual machine corresponding to the control plane function and a user plane virtual machine corresponding to the user plane function.

13. The apparatus according to claim 11, wherein the partitioning module is specifically configured to partition the functions of the home management device to obtain a control plane function and a user plane function of the home management device, wherein the user plane function comprises an I/O function, an interface protocol processing function, a querying function, a writing function, an updating function and a data storing function; and
the virtualizing module is specifically configured to perform virtualization processing on the control plane function and the user plane function, respectively, to obtain a control plane virtual machine corresponding to the control plane function and a user plane virtual machine corresponding to the user plane function, wherein the user plane virtual machine comprises an I/O virtual machine corresponding to the I/O function, an interface protocol virtual machine corresponding to the interface protocol processing function, a querying virtual machine corresponding to the querying function, a writing virtual machine corresponding to the writing function, an updating virtual machine corresponding to the updating function and a data storing virtual machine corresponding to the data storing function.

14. The apparatus according to claim 12 or 13, wherein the control plane function comprises an access control sub-function, a location management sub-function, a security management sub-function, a path management sub-function and an extension sub-function.
